# EUROPEAN PATENT APPLICATION

(11) **EP 2 644 053 A1**
(43) Date of publication of application: **02.10.2013**
(21) Application number: 13001518.3
(22) Date of filing: 25.03.2013
(51) Int. Cl.: A47B 88/14

(54) **Synchronizing device for drawer and anti-wobbling unit**

(30) Priority: 26.03.2012 TW 101110371
(71) Applicant: Slide Mei Yao International Co., Ltd., New Taipei City 24158 (TW)
(72) Inventor: Chen, Tsung-Yao, Jhuci Township Chiayi County 604 (TW)
(74) Representative: Samson & Partner

(57) **Abstract**

A synchronizing device (9) includes a pair of guiding units (4), a pair of rotating units (5), a synchronizing linking unit (6), and at least one anti-wobbling unit (7) . Each rotating unit (5) includes a pinion gear (51). The synchronizing linking unit (6) interconnects the rotating units (5) to synchronize movements of the pinion gears (51) on the guiding units (4), and includes at least one synchronizing spindle (61) and at least one synchronizing spindle extension connector (62) that is connected to the synchronizing spindle (61) and that includes an annular contact surface with a non-circular cross-section to interlock with the synchronizing spindle (61) The anti-wobbling unit includes a resilient anti-wobbling pad member (71) to prevent wobbling of the synchronizing linking unit (6).

## Description

The invention relates to a synchronizing device, and more particularly to a synchronizing device that is adapted for synchronizing sliding movements of sliding rail units that are respectively disposed on two opposite sides of a drawer. The invention also relates to a synchronizing spindle extension connector and an anti-wobbling unit adapted to be applied to the synchronizing device.

In order to smoothly slide a drawer in or out of a cabinet, a pair of sliding rail units are disposed on two opposite sides of the drawer so as to be positioned between the drawer and the cabinet, respectively. In addition, to prevent an uneven force from causing asynchronous sliding movements of the sliding rail units, a synchronizing device is generally provided to synchronize smooth movements of the sliding rail units.

Currently, a conventional synchronizing device includes a pair of rack members that are respectively mounted on a cabinet, a pair of pinion gears that are respectively rotatably mounted on two opposite sides of a drawer, and a spindle that interconnects and drives the pinion gears in synchronous rotation. In use, the pinion gears move along and mesh with the rack members, synchronously. Due to the synchronous rotation and equal travel of the pinion gears along the rack members, the drawer is smoothly slidable without swerving relative to the sliding rail units in the cabinet.

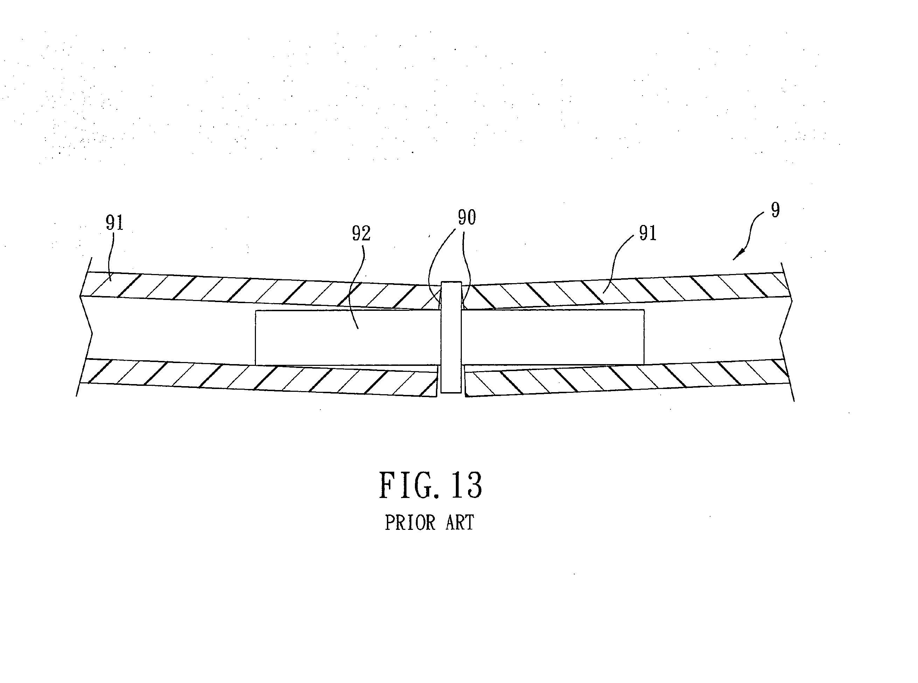

However, when the drawer has a relatively large dimension, the spindle of the conventional synchronizing device has to be correspondingly lengthened in order to interconnect the pinion gears. Some spindles may even have a length that ranges from 150 centimeters to 200 centimeters. Hence, there are great dimension differences among components of the conventional synchronizing device and the components are not suitable in a uniform packing. As shown in Figure 13, in order to conveniently pack, transport, assemble, and store the components of the conventional synchronizing device, the spindle 9 is divided into two spindle sections 91. When assembling on site, a spindle extension connector 92 is used for interconnecting the spindle sections 91 such that the spindle sections 91 are assembled to form the spindle 9. If the spindle sections 91 are stretchable relative to each other to change the length of the spindle 9, a connection between the spindle sections 91 may not be stable after being assembled. Since connection portions between the spindle extension connector 92 and the spindle sections 91 may respectively have relatively large rotation gaps, the synchronous rotation of the pinion gears of the conventional synchronizing device may be adversely affected.

Beside, since the spindle 9 of the conventional synchronizing device is relatively long and is formed by assembling the two spindle sections 91, the rigidity of the spindle 9 is uneven and the spindle 9 may be deformed due to gravity. Hence, splits 90 may be formed between the spindle extension connector 92 and the spindle sections 91. The spindle 9 may be gradually bent from two opposite end sides toward a central portion therebetween. When the spindle 9 is driven to rotate by the pinion gears, the spindle 9 may have wobbling rotation. Moreover, a relatively maximum deformation of the spindle 9 may occur at the connection between the spindle extension connector 92 and the spindle sections 91. The wobbling of the spindle 9 may collide with the drawer to make noise.

Therefore, the present invention is to provide a synchronizing device that can alleviate at least one drawback of the aforementioned conventional synchronizing device.

According to one aspect of the present invention, a synchronizing device is adapted for synchronizing sliding movements of a pair of sliding rail units that are respectively disposed on two opposite sides of a drawer. The synchronizing device includes a pair of guiding units, a pair of rotating units, a synchronizing linking unit, and at least one anti-wobbling unit. The pair of guiding units are adapted to support and slide the sliding rail units thereon, respectively. Each of the guiding units has a longitudinal rack member. The pair of rotating units are adapted to be respectively and rotatably disposed on the two sides of the sliding drawer, and are able to rotate on the guiding units, respectively. Each of the rotating units includes a mounting seat and a pinion gear that is journeyed on the mounting seat and that meshes with and moves along the rack member of a corresponding one of the guiding units. The synchronizing linking unit interconnects the rotating units to synchronize movements of the pinion gears of the rotating units. The synchronizing linking unit includes at least one synchronizing spindle, and at least one synchronizing spindle extension connector connected to the synchronizing spindle. The synchronizing spindle extension connector has a connecting end portion including an annular contact surface that has a non-circular cross-section and that is able to interlock with the synchronizing spindle for simultaneous rotation. The anti-wobbling unit is mounted between the sliding drawer and the synchronizing linking unit, and includes a resilient anti-wobbling pad member to prevent wobbling of the synchronizing linking unit.

According to another aspect of the present invention, a synchronizing spindle extension connector is adapted to be connected axially to a synchronizing spindle of a synchronizing linking unit of a synchronizing device, and includes two opposite connecting end portions, at least one of which includes a contact surface that has a non-circular cross-section and that is adapted to interlock with the synchronizing spindle.

According to a further aspect of the present invention, an anti-wobbling unit is adapted for a synchronizing spindle of a synchronizing device of a drawer, and includes an anti-wobbling pad member that is made of a resilient material and that is adapted for preventing wobbling of the synchronizing spindle.

According to still another aspect of the present invention, there is provided an anti-wobbling unit of a synchronizing device. The synchronizing device includes a synchronizing spindle extension connector connected to at least one synchronizing spindle. The anti-wobbling unit includes an anti-wobbling pad member that is adapted to be mounted on the synchronizing spindle extension connector.

Other features and advantages of the present invention will become apparent in the following detailed description of the preferred embodiments with reference to the accompanying drawings, of which:
Figure 1 is a perspective view of a first preferred embodiment of a synchronizing device according to the present invention, illustrating a sliding drawer with the synchronizing device sliding out relative to a cabinet;
Figure 2 is an exploded fragmentary perspective view, illustrating the first preferred embodiment;
Figure 3 is a fragmentary longitudinal sectional view of the first preferred embodiment;
Figure 4 is a fragmentary transverse sectional view of the first preferred embodiment;
Figure 5 is an exploded fragmentary perspective view of the first preferred embodiment, illustrating the synchronizing device mounted on a rear side of the sliding drawer;
Figure 6 is a fragmentary transverse sectional view of a second preferred embodiment of the present invention;
Figure 7 is a fragmentary traverse sectional view, illustrating a third preferred embodiment of the present invention;
Figure 8 is an exploded fragmentary perspective view, illustrating a fourth preferred embodiment of the present invention;
Figure 9 is a fragmentary traverse sectional view of the fourth preferred embodiment;
Figure 10 is an exploded fragmentary perspective view, illustrating a fifth preferred embodiment of the present invention;
Figure 11 is a top view of the fifth preferred embodiment;
Figure 12 is a fragmentary transverse sectional view of the fifth preferred embodiment; and
Figure 13 is a fragmentary sectional view, illustrating a conventional spindle.

Before this invention is described in detail, it should be noted that, in the following description, similar elements are designated by the same reference numerals.

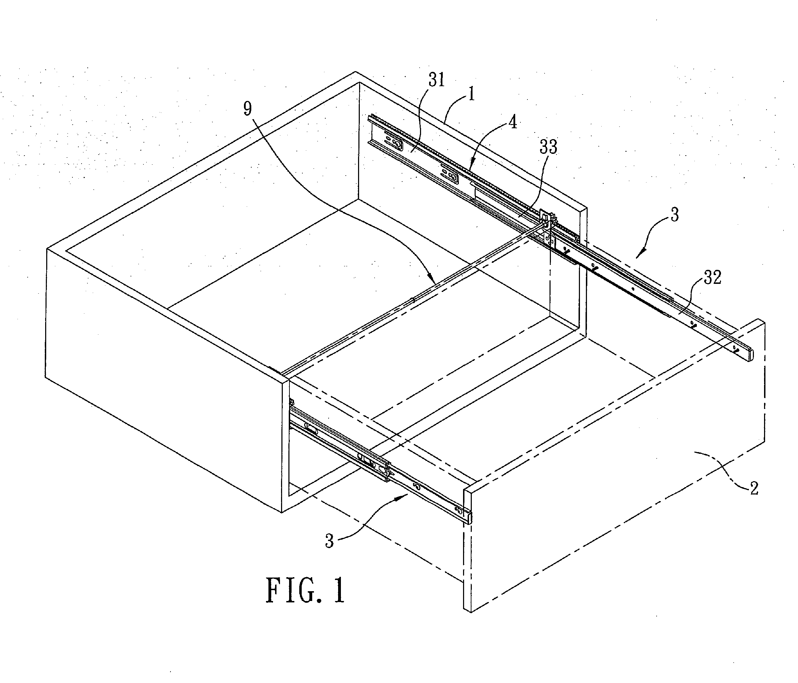

Referring to Figure 1, the first preferred embodiment of a synchronizing device 9 according to the present invention is adapted to be positioned between a cabinet 1 and a sliding drawer 2. The synchronizing device 9 is adapted for synchronizing sliding movements of a pair of sliding rail units 3 that are respectively disposed on two opposite sides of the sliding drawer 2. By means of the sliding rail units 3, the sliding drawer 2 is forward or backward slidable relative to the cabinet 1. Each of the sliding rail units 3 includes a first slide rail 31 disposed on an interior side of the cabinet 1, a second slide rail 32 disposed on one side of the sliding drawer 2 and slidable relative to the first slide rail 31, and an intermediate slide rail 33 movably disposed between the first and second slide rails 31, 32 for lengthening the travel of the second slide rail 32 relative to the cabinet 1. In actual implementation, the intermediate slide rail 33 may be omitted and each of the sliding rail units 3 may include only the first and second slide rails 31, 32 so as to be configured as a two-part slide rail structure. In use, when the drawer 2 is pulled to move forward or backward relative to the cabinet 1, the second slide rails 32 are driven to respectively slide relative to the first slide rails 31, and thus to direct the drawer 2 to have a smooth movement relative to the cabinet 1.

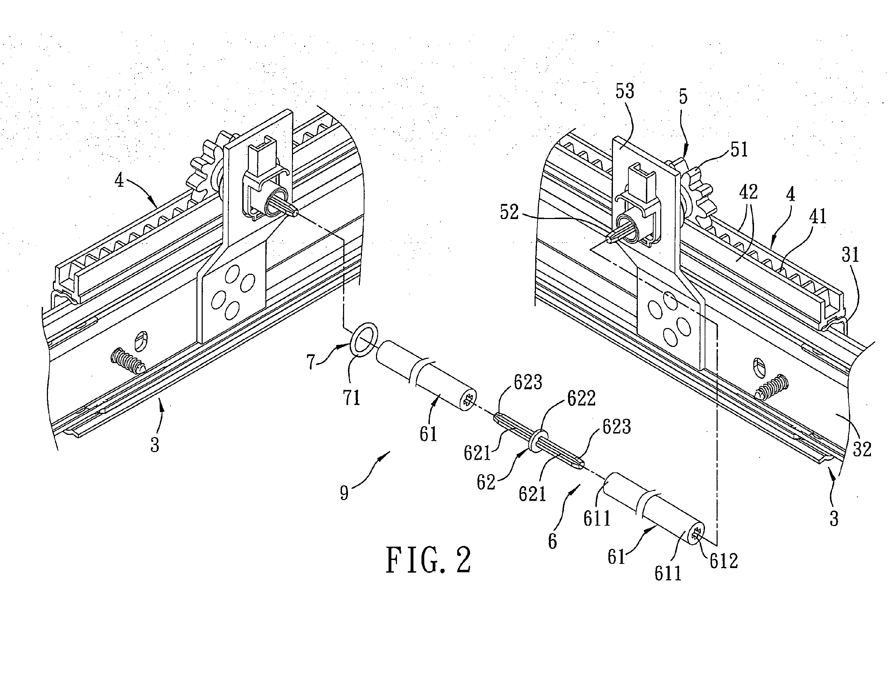

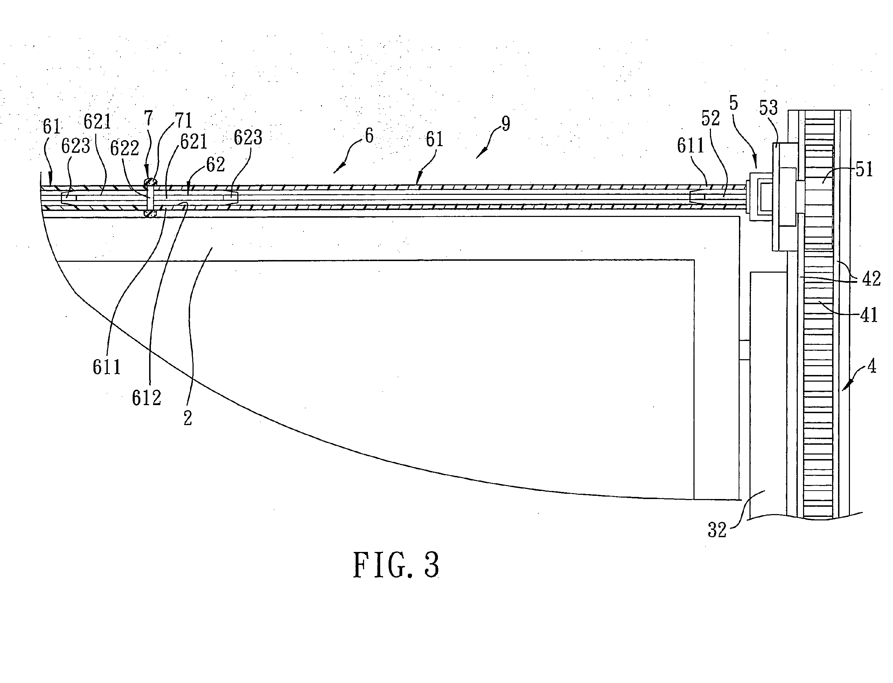

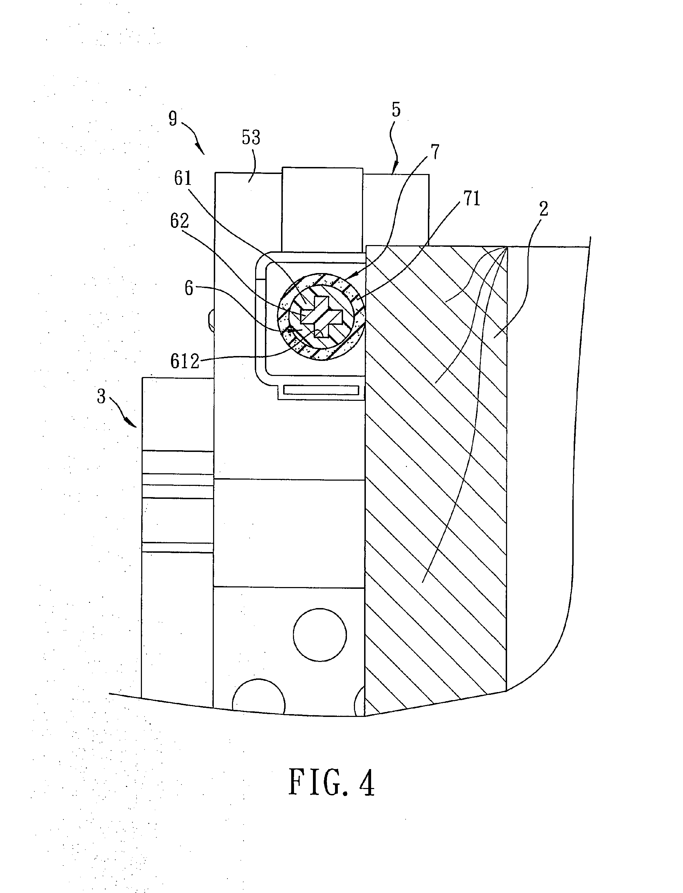

Referring to Figures 2 to 4, the synchronizing device 9 includes a pair of guiding units 4, a pair of rotating units 5, a synchronizing linking unit 6, and at least one anti-wobbling unit 7.

The pair of guiding units 4 are adapted to support and slide the sliding rail units 3 thereon, respectively. Each of the guidingunits 4 has a longitudinal rack member 41. In this embodiment, the guiding units 4 are respectively mounted on top ends of the first slide rails 31. However, the guiding units 4 may have various placements relative to the sliding rail units 3 depending upon the intended structural designs. Preferably, each of the guiding units 4 has two side walls 42 to retain a corresponding one of the rotating units 5 therebetween.

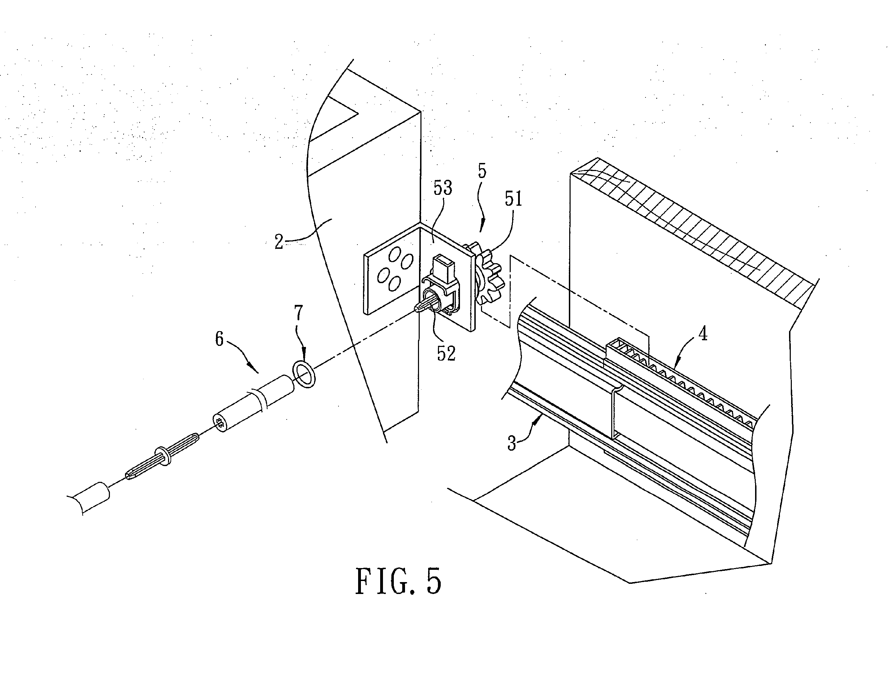

The rotating units 5 are adapted to be respectively and rotatably disposed on the two sides of the sliding drawer 2 and are able to rotate on the guiding units 4, respectively. Each of the rotating units 5 includes a mounting seat 53 and a pinion gear 51 that is journalled on the mounting seat 53 and that meshes with and moves along the rack member 41 of a corresponding one of the guiding units 4. Preferably, each of the rotating units 5 includes a pinion shaft 52 that is integrally formed with the pinion gear 51 and that extends toward another rotating unit 5. In this preferred embodiment, the mounting seat 53 is mounted on a corresponding one of the second slide rails 32 to be engaged with the pinion shaft 52. Since each of the pinion gears 51 of the rotating units 5 is retained between the side walls 42 of the corresponding one of the guiding units 4, the pinion gear 51 is able to move along the corresponding one of the guiding units 4 without swerving from the guiding unit 4 and is prevented from separating from the guiding unit 4. Hence, the probability of malfunction can be reduced. Alternatively, as shown in Figure 5, the mounting seat 53 of each rotating unit 5 is mounted on a rear side of the sliding drawer 2. Therefore, the present invention should not be limited to the disclosure of this embodiment. In addition, there are other components between the pinion shaft 52 and the mounting seat 53. Since the feature of this invention does not reside in the configuration of the other components between the pinion shaft 52 and the mounting seat 53, which may be readily appreciated by those skilled in the art, details of the same are omitted herein for the sake of the brevity.

The synchronizing linking unit 6 interconnects the rotating units 5 to synchronize movements of the pinion gears 51 of the rotating units 5. The synchronizing linking unit 6 includes at least one synchronizing spindle 61 and at least one synchronizing spindle extension connector 62 that is connected to the synchronizing spindle 61. The synchronizing spindle extension connector 62 has a connecting end portion 621 including an annular contact surface that has a non-circular cross-section and that is able to be inserted into and interlocked with the synchronizing spindle 61 for simultaneous rotation. In this preferred embodiment, the synchronizing linking unit 6 includes two synchronizing spindles 61 that are respectively connected to the pinion shafts 52 of the rotating units 5. However, the numbers of the synchronizing spindles 61 and the synchronizing spindle extension connectors 62 may vary depending upon the desired dimension and design of the sliding drawer 2. Aside from the arrangement of two synchronizing spindles 61 and one synchronizing spindle extension connector 62 illustrated in this preferred embodiment, the arrangement may be modified to include three of the synchronizing spindles 61 in conjunction with two of the synchronizing spindle extension connectors 62. Alternatively, the synchronizing spindle extension connector 62 may be configured to have one end connected to the spindle 61 and the other end axially connected to the corresponding rotating unit 5. The numbers of the synchronizing spindles 61 and the synchronizing spindle extension connectors 62 may be varied and are not be limited to the disclosure of this preferred embodiment.

In this preferred embodiment, each of the synchronizing spindles 61 is hollow and has two opposite spindle end portions 611. The synchronizing spindle extension connector 62 includes two opposite connecting end portions 621, at least one of which includes an annular contact surface that has a non-circular cross-section and that is adapted to be inserted into and interlocked with a corresponding one of the synchronizing spindles 61. In this preferred embodiment, both of the connecting end portions 621 are configured as insert rods that are respectively insertable into the corresponding ones of the spindle end portions 611 of the two synchronizing spindles 61. Preferably, the synchronizing spindle extension connector 62 further includes a blocking portion 622 that is disposed between the two connecting end portions 621 and that is able to block the synchronizing spindles 61 so that the synchronizing spindles 61 do not extend beyond the blocking portion 622. More preferably, each of the connecting end portions 621 has an inclined guide end 623 that is distal from the blocking portion 622 and that is outwardly tapered. The inclined guide end 623 facilitates the synchronizing spindle extension connector 62 to be inserted into the corresponding one of the synchronizing spindles 61. In this preferred embodiment, the synchronizing spindles 61 are respectively connected to the pinion shafts 52. When the number of the synchronizing spindles 61 is increased, only the synchronizing spindles 61 proximate to the pinion shafts 52 are respectively connected to the pinion shafts 52. The other synchronizing spindles 61 are connected to each other through the synchronizing spindle extension connectors 62. During assembling, each of the pinion shafts 52 is inserted into one of the spindle end portions 611 of the corresponding one of the synchronizing spindles 61. The connecting end portions 621 of the synchronizing spindle extension connectors 62 are respectively inserted into two adjacent ones of the spindle end portions 611 of two adjacent ones of the synchronizing spindles 61 until the blocking portions 622 abut against end edges of the two adjacent synchronizing spindles 61.

Specifically, in order to prevent the rotating units 5 and the synchronizing unit 6 from being asynchronous, the pinion shaft 52 of each rotating unit 5 has an annular surface that has a non-circular cross-section. Preferably, the annular contact surface of the connecting end portion 621 of the synchronizing spindle extension connectors 62 and the annular surface of the pinion shaft 52 of each rotating unit 5 are the same in shape. Each of the spindle end portions 611 of each synchronizing spindle 61 has an annular inner surface 612 that has a non-circular cross-section complementary to the annular contact surface of the connecting end portion 621 of the synchronizing spindle extension connectors 62 and the annular surface of the pinion shaft 52 of each rotating unit 5 in shape. The annular contact surfaces of the connecting end portions 621 of each synchronizing spindle extension connector 62 and the annular surface of the pinion shaft 52 of each rotating unit 5 may be configured to have different shapes, such as slotted contour, rectangular contour, triangular contour, polygonal contour, oval contour, etc., and the annular inner surfaces 612 of the spindle end portions 611 of each synchronizing spindle 61 are correspondingly configured to have a complementary contour. In this preferred embodiment, the annular contact surfaces of the connecting end portions 621 of the synchronizing spindle extension connectors 62 and the annular surfaces of the pinion shafts 52 of the rotating units 5 are configured to have a cross contour, and the annular inner surfaces 612 of the spindle end portions 611 of the synchronizing spindle 61 are correspondingly configured to have a complementary cross contour. However, the present invention is not limited in this respect.

In this preferred embodiment, the anti-wobbling unit 7 is mounted between the sliding drawer 2 and the linking unit 6 and includes a resilient anti-wobbling pad member 71 to prevent wobbling of the synchronizing linking unit 6. Preferably, the anti-wobbling pad member 71 is made of a resilient material selected from rubber, plastics, foams, etc., thereby preventing wobbling of the synchronizing spindle 61. In this preferred embodiment, the anti-wobbling pad member 71 is a ring that is sleeved around the synchronizing spindle extension connector 62 and that is situated between the sliding drawer 2 and the synchronizing linking unit 6 so as to prevent wobbling of the synchronizing spindle 61. In actual implementation, length and thickness of the anti-wobbling pad member 71 are not limited to the disclosure of this embodiment. Alternatively, the number of the anti-wobbling unit 7 may be increased so as to be disposed on easily deformable portions of the synchronizing linking unit 6. For example, the anti-wobbling pad member 71 is sleeved around easily deformable portions of the synchronizing spindle 61, thereby prevent wobbling of the synchronizing spindle 61.

Referring to Figures 1, 3, and 4, when a user pulls the sliding drawer 2, the sliding rail units 3 disposed on the sliding drawer 2 will move together therewith and drive the synchronizing linkingunit 6 to synchronize movements of the rotating units 5. When the pinion gears 51 engagingly move on the respective rack members 41, revolutions or rotating angles of the two pinion gears 51 are generally the same, thereby ensuring synchronous movements of the two second slide rails 32 on two sides of the sliding drawer 2. Therefore, a swerving problem caused by an uneven force applied to the sliding drawer 2 can be avoided. Hence, the sliding drawer 2 is smoothly slidable relative to the cabinet 1.

For the synchronizing linking unit 6 of this invention, the synchronizing spindle extension connector 62 is inserted into and interlocked with respective ones of the synchronizing spindles 61 for connection, thereby having a simple structure and being convenient to be assembled. Since each synchronizing spindle 61 has a uniform diameter, each synchronizing spindle 61 is able to be divided into different length sections. In order to conform to various sizes of the cabinet 1, the different length sections of the synchronizing spindles 61 may be increased in number or varied in length. Therefore, the synchronizing linking unit 6 is convenient to be fabricated, assembled, and packed. Moreover, the synchronizing linking unit 6 is convenient and suitable for being assembled in correspondence with the size variation of the cabinet 1 on site.

When the sliding drawer 2 has a relatively large width, the synchronizing linking unit 6 is required to correspondingly have a relatively long length in its entirety to satisfy the width of the sliding drawer 2. After assembly, the synchronizing linking unit 6 has an overall weight that sags from two opposite outermost spindle end portions 611 of the synchronizing spindles 61 to a central region of the synchronizing linking unit 6. Therefore the overall weight deforms the synchronizing linking unit 6. Since the anti-wobbling unit 7 is mounted between the sliding drawer 2 and the linking unit 6, particularly in case that the anti-wobbling unit 7 covers a relatively large deformation region of the synchronizing linking unit 6, the anti-wobblingpadmember 71 frictionally contacts the sliding drawer 2 to prevent impact noise when the synchronizing linking unit 6 synchronously moves with the rotating units 5 in a wobbling state and thus achieves relatively better noise-proof effect. Besides, the anti-wobbling.pad member 71 corrects the relatively large deformation region of the synchronizing linking unit 6 to reduce wobbling of the synchronizing linking unit 6, so that the wobbling of the synchronizing linking unit 6 is allowable and does not affect rotation of the rotating units 5.

In other words, according to the present invention, by virtue of inclusion of the plurality of the synchronizing spindles 61 having relatively shorter length, components of the synchronizing device are convenient during transport and packing. During assembling, the plurality of the synchronizing spindle extension connectors 62 are used for connection of the synchronizing spindles 61. However, such connective structure causes the synchronizing linking unit 6 to sag and have wobbling rotation. As a result, the synchronizing linking unit 6 may result in the rotating units 5 easily jumping off the guiding units 4 when the rotating units 5 rotate on the guiding units 4. Through a practical test, when the synchronizing spindle extension connectors 62 are specially increased to be interlocked with the synchronizing spindles 61, the aforesaid circumstance is likely to be more severe. Hence, the anti-wobbling unit 7 is attributed to restrict wobbling of the synchronizing linking unit 6 and reduce noise. Therefore, the pinion gears 51 are prevented from disengaging from the rack members 41 because the synchronizing spindles 61 are prevented from swerving therebetween.

Moreover, according to this invention, the synchronizing linking unit 6 and other components of the synchronizing device 9, as well as the sliding rail units 3 may have relatively similar packing volume scales and are prevented from being bent and deformed by gravity or other external force. In response to dimension standardizing in the global cabinet market to merge with modular design conception, the packing volume scales are based on 10 centimeter increments per length unit. The length of the synchronizing linking unit 6 conforms to the width of the cabinet 1. When the width of the cabinet 1 ranges from 40 centimeters to 200 centimeters, the length of the synchronizing spindle 61 is configured to comply with the minimum width, 40 centimeters, of the cabinet 1 as a desired basic dimension. The synchronizing spindle 61 is divided into 10 centimeter sections in order to facilitate packing in a uniform multi-section standard, thereby having convenience of packing. When assembling on site, because the sections of the synchronizing spindles 61 are corresponding to the width of the cabinet 1 in desired quantities, it is not required to use measurement and cutting tools and the synchronizing spindles 61 are assembled in the cabinet 1 by a DIY method. According to the present invention, the synchronizing device 9 can be packed in the uniformmulti-section standard to conform to various dimensions of the cabinet 1, thereby resolving imbalance quantity between the synchronizing device 9 and the cabinet in stock.

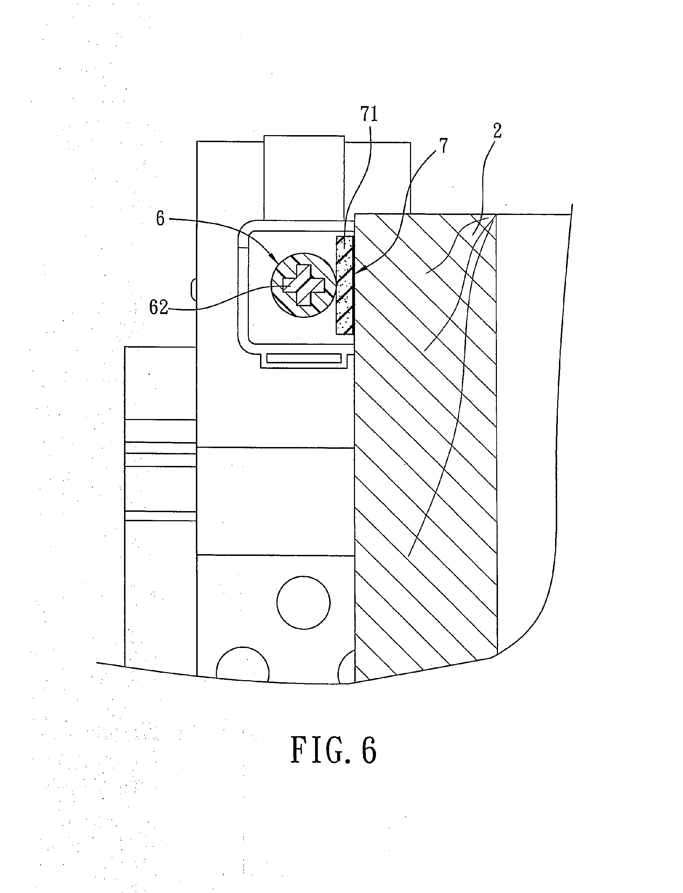

Figure 6 shows a second preferred embodiment of a synchronizing device 9 according to this invention, which has a structure generally similar to that of the first preferred embodiment. However, the anti-wobbling pad member 71 of the anti-wobbling unit 7 is configured as a plate body that is mounted on the sliding drawer 2 and that abuts against the synchronizing spindle 61. In this preferred embodiment, the anti-wobbling pad member 71 abuts against a central portion of the synchronizing spindle extension connectors 62 of the synchronizing linking unit 6 so as to restrict wobbling of the synchronizing linking unit 6. Therefore, the anti-wobbling unit 7 prevents the synchronizing linking unit 6 from impacting the sliding drawer 2, thereby achieving the noise-proof effect.

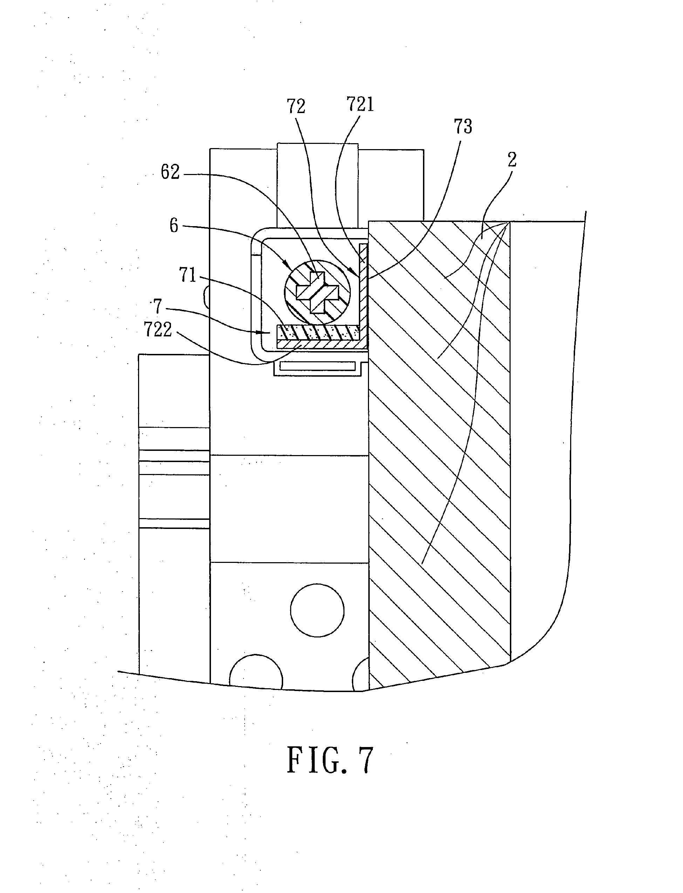

Figure 7 shows a third preferred embodiment of a synchronizing device 9 according to this invention, which has a structure generally similar to that of the second preferred embodiment. However, in the preferred embodiment, the anti-wobbling unit 7 further includes a supporting seat 72 that supports the anti-wobbling pad member 71, and a fixture member 73 that fixes the supporting seat 72 to the sliding drawer 2. In this preferred embodiment, the anti-wobbling pad member 71 is configured as a plate body that abuts against the synchronizing spindle 61. The supporting seat 72 is configured as an L-shaped plate body. Preferably, the supporting seat 72 has a fixed portion 721 that is fixed on the rear side of the sliding drawer 2 through the fixture member 73 and a supporting portion 722 that extends horizontally and outwardly from a bottom end of the fixed portion 721. In this preferred embodiment, the fixture member 73 is an adhesive. However, in actual implementation, the fixture member 73 may be a screw or a bolt. Furthermore, the number of the fixture member 73 may be increased. In this preferred embodiment, the anti-wobbling pad member 71 is mounted on the supporting portion 722, and abuts against an outer surface of the synchronizing spindle extension connectors 62 of the synchronizing linking unit 6. When the synchronizing linking unit 6 is stationary, the anti-wobbling unit 7 prevents the synchronizing linking unit 6 from sagging.

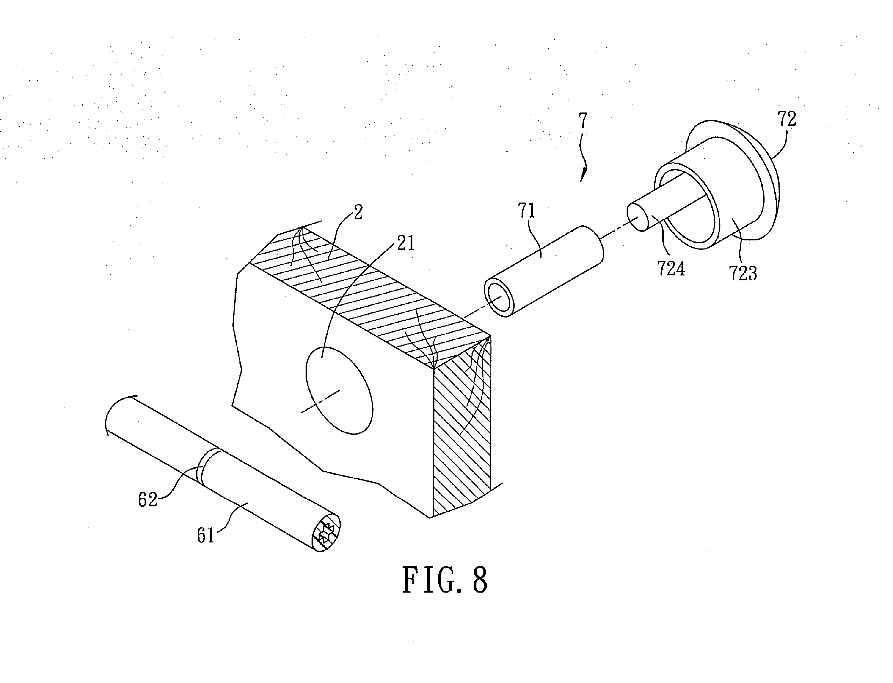

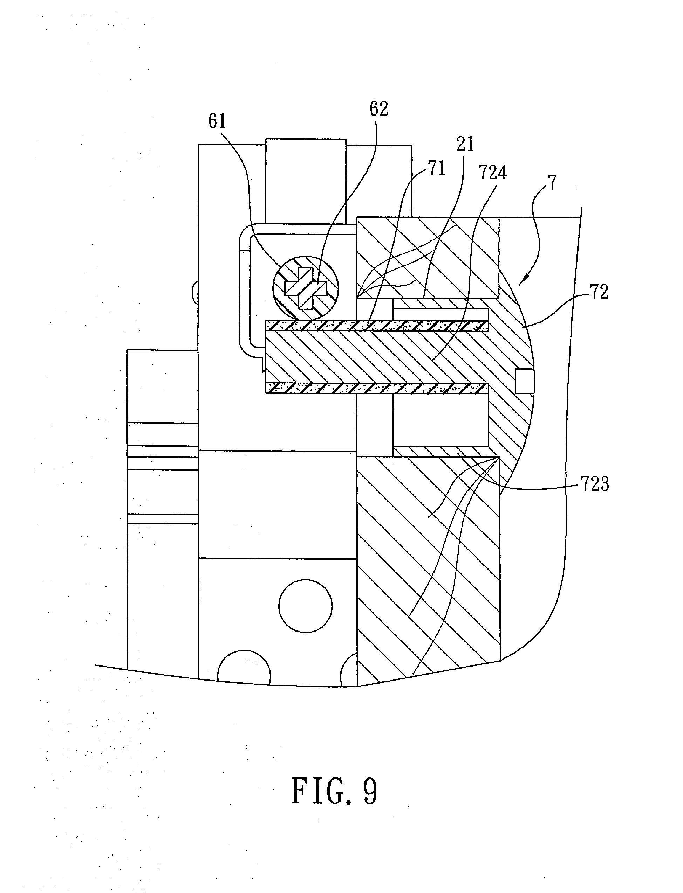

Figures 8 and 9 show a fourth preferred embodiment of a synchronizing device 9 according to this invention, which has a structure generally similar to that of the third preferred embodiment. However, in the preferred embodiment, the sliding drawer 2 has a mounting hole 21 formed in the rear side thereof. The supporting seat 72 of the anti-wobbling unit 7 is directly mounted on the sliding drawer 2. In this preferred embodiment, the supporting seat 72 has a hollow plug head portion 723 that is plugged fixedly in the mounting hole 21 of the sliding drawer 2, and a stem 724 that is disposed inside the plug head portion 723 and that is eccentric to a central axis of the plug head portion 723. The anti-wobbling pad member 71 is a ring that is sleeved around the stem 724 and that abuts against the synchronizing spindle 61 of the synchronizing linking unit 6. Therefore, the anti-wobbling pad member 71 is capable of achieving the noise-proof effect and preventing wobbling of the synchronizing linking unit 6. During assembling the anti-wobbling unit 7, by virtue of an eccentric design of the stem 724 relative to the plug head portion 723, the plug head portion 723 is rotatable in the mounting hole 21 so that the stem 724 is driven thereby to abut against and prevent the synchronizing spindle extension connectors 62 of the synchronizing linking unit 6 from sagging.

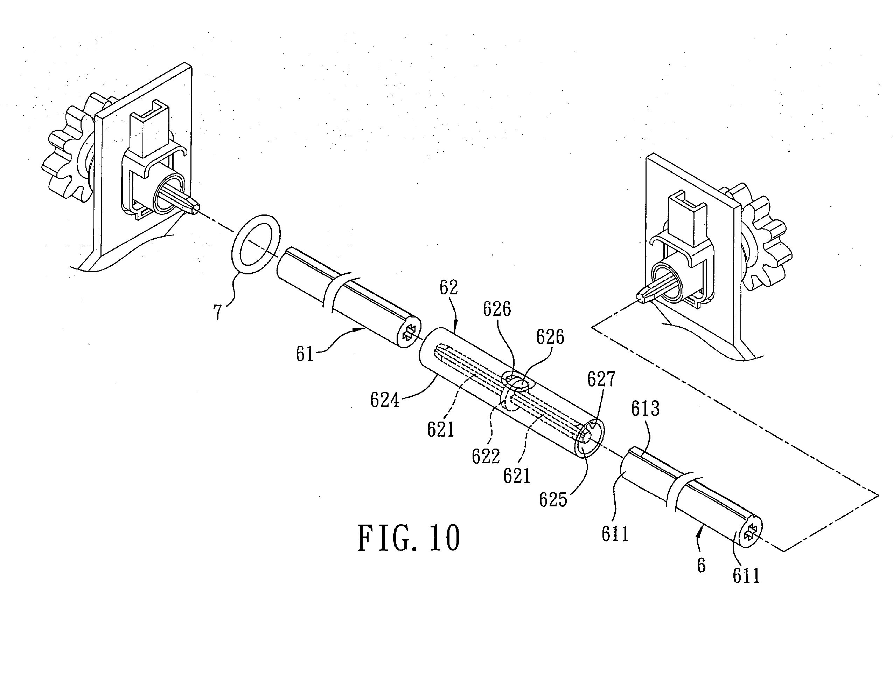

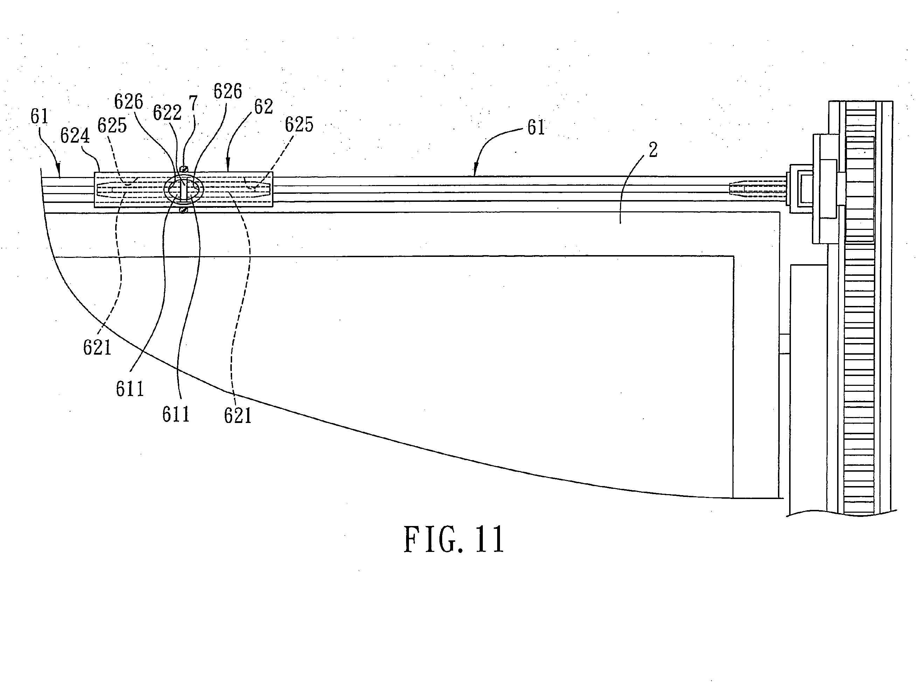

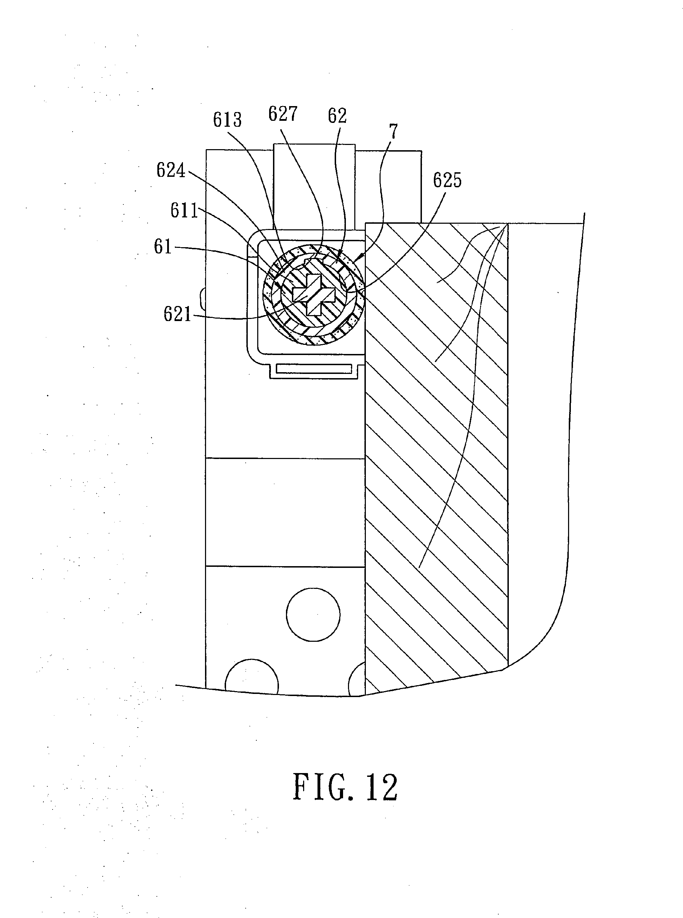

Figures 10 to 12 show a fifth preferred embodiment of a synchronizing device 9 according to this invention, which has a structure generally similar to that of the first preferred embodiment. However, in the preferred embodiment, the synchronizing spindle extension connector 62 further includes a sleeve portion 624 that is disposed around the connecting end portions 621 and that is sleeved around the synchronizing spindles 61 and the blocking portion 622 of the synchronizing spindle extension connector 62. The sleeve portion 624 cooperates with the connecting endportions 621 to define an insertion space 625 that accommodates the spindle end portions 611 of the synchronizing spindles 61. The sleeve portion 624 has two opposite open ends and at least one opening 626 that is disposed between the two opposite open ends and that is adapted for viewing the synchronizing spindle 61 and examining whether the synchronizing spindle 61 is situated in a predetermined position inside the sleeve portion 624. In this preferred embodiment, the sleeve portion 624 has two openings 626 that are respectively proximate to two sides of the blocking portion 622 of the synchronizing spindle extension connector 62 and that respectively communicate with the insertion space 625. The openings 626 permit a worker to view whether the spindle end portions 611 of the synchronizing spindles 61 are respectively inserted into the insertion space 625 to abut against the blocking portion 622 of the synchronizing spindle extension connector 62. In actual implementation, the openings 626 may communicate with each other to be merged into one opening.

Preferably, the sleeve portion 624 further has an inner periphery surface that has a non-circular cross-section, and two lengthwise grooves 627 that lengthwise extend from the openings 626 and that extend inwardly from the inner periphery surface of the sleeve portion 624. The lengthwise grooves 627 respectively communicate with the insertion space 625. Each of the spindle end portions 611 of the synchronizing spindles 61 has an outer periphery surface that has a non-circular cross-section, and a lengthwise protrusion 613 that is lengthwise formed on the outer periphery surface and that is received in a corresponding one of the lengthwise grooves 627. In this preferred embodiment, by virtue of an engagement of the lengthwise protrusion 613 and the corresponding one of the lengthwise grooves 627, the cross-sections of each of the spindle end portions 611 and the sleeve portion 624 are configured to have a key-keyhole-shaped engagement structure. However, the engagement structure formed between the cross-sections of each of the spindle end portions 611 and the sleeve portion 624 is not limited to the disclosure of this embodiment. For example, the engagement structure formed between the cross-sections of each of the spindle end portions 611 and the sleeve portion 624 maybe circular. In this preferred embodiment, by virtue of installation of the sleeve portion 624, a firm connection is enhanced between the synchronizing spindle extension connector 62 and the synchronizing spindles 61. Alternatively, the anti-wobbling pad member 71 of the anti-wobbling unit 7 may be substituted for an anti-wobbling pad member that is exemplified in the second embodiment to the fourth embodiment.

To sum up, in order to alleviate drawbacks of the conventional synchronizing linking unit such as various packing dimensions, deformation during transport, and use of measurement and cutting tools on site, and to balance the number of other components in stock to coordinate various dimensions of the cabinet 1, the synchronizing spindle extension connector 62 of the synchronizing device 9 according to the present invention is used to be interlocked with the synchronizing spindles 61. When the numbers of the synchronizing spindle extension connectors 62 and the synchronizing spindles 61 are increased, a combined length of the synchronizing spindle extension connectors 62 and the synchronizing spindles 61 is relatively lengthened but results in wobbling thereof when driven to rotate. The anti-wobbling unit 7 is used to prevent the connection wobbling among the synchronizing spindle extension connectors 62 and the synchronizing spindles 61, and thus prevent impact of the sliding drawer 2.

## Claims

1. A synchronizing device (9) for synchronizing sliding movements of a pair of sliding rail units (3) that are respectively disposed on two opposite sides of a sliding drawer (2), the synchronizing device (9) **characterized by**:
a pair of guiding units (4) adapted to support and slide the sliding rail units (3) thereon, respectively, each of said guiding units (4) having a longitudinal rack member (41);
a pair of rotating units (5) that are adapted to be respectively and rotatably disposed on the two sides of the sliding drawer (2) and that are able to rotate on said guiding units (4), respectively, each of said rotating units (5) including a mounting seat (53) and a pinion gear (51) that is journalled on said mounting seat (53) and that meshes with and moves along said rack member (41) of a corresponding one of said guiding units (4);
a synchronizing linking unit (6) interconnecting said rotating units (5) to synchronize movements of said pinion gears (51) of said rotating units (5), said synchronizing linking unit (6) including at least one synchronizing spindle (61), and at least one synchronizing spindle extension connector (62) connected to said synchronizing spindle (61), said synchronizing spindle extension connector (62) having a connecting end portion (621) including an annular contact surface that has a non-circular cross-section and that is able to be inserted into and interlocked with said synchronizing spindle (61) for simultaneous rotation; and
at least one anti-wobbling unit (7) to be mounted between the sliding drawer (2) and said synchronizing linking unit (6), said anti-wobbling unit (7) including a resilient anti-wobbling pad member (71) to prevent wobbling of said synchronizing linking unit (6).

2. A synchronizing spindle extension connector (62) adapted to be connected axially to a synchronizing spindle (61) of a synchronizing linking unit (6) of a synchronizing device (9), the synchronizing spindle extension connector (62) **characterized by** two opposite connecting end portions (621), at least one of which includes an annular contact surface that has a non-circular cross-section and that is adapted to be inserted into and interlocked with said synchronizing spindle (61).

3. The synchronizing spindle extension connector (62) as claimed in Claim 2, **characterized in that** said at least one of the connecting end portions (621) is configured as an insert rod that is insertable into the synchronizing spindle (61), which is hollow.

4. The synchronizing spindle extension connector (62) as claimed in Claim 2, further **characterized by** a blocking portion (622) that is disposed between said two connecting end portions (621) and that is adapted to block the synchronizing spindle (61) so that the synchronizing spindle (61) does not extend beyond said blocking portion (622).

5. The synchronizing spindle extension connector (62) as claimed in Claim 2, further **characterized by** a sleeve portion (624) that is disposed around said connecting end portions (621) and that is adapted to be sleeved around the synchronizing spindle (61).

6. The synchronizing spindle extension connector (62) as claimed in Claim 5, **characterized in that** said sleeve portion (624) has two opposite open ends and at least one opening (626) that is disposed between said two opposite open ends and that is adapted for viewing the synchronizing spindle (61) and examining whether the synchronizing spindle (61) is situated in a predetermined position inside of said sleeve portion (624).

7. An anti-wobbling unit (7) for a synchronizing spindle (61) of a synchronizing device (9) of a sliding drawer (2), the anti-wobbling unit (7) **characterized by** an anti-wobbling pad member (71) that is made of a resilient material and that is adapted for preventing wobbling of the synchronizing spindle (61).

8. The anti-wobbling unit (7) as claimed in Claim 7, **characterized in that** said anti-wobbling pad member (71) is a ring that is adapted to be sleeved around the synchronizing spindle (61).

9. The anti-wobbling unit (7) as claimed in Claim 7, **characterized in that** said anti-wobbling pad member (71) is configured as a plate body that is adapted for mounting on the sliding drawer (2) and that is adapted for abutting against the synchronizing spindle (61).

10. The anti-wobbling unit (7) as claimed in Claim 7, further **characterized by** a supporting seat (72) that supports said anti-wobbling pad member (71), and a fixture member (73) that fixes said supporting seat (72) to the sliding drawer (2), said anti-wobbling pad member (71) being configured as a plate body that is adapted for abutting against the synchronizing spindle (61).

11. The anti-wobbling unit (7) as claimed in Claim 7, further **characterized by** a supporting seat (72) that is adapted for mounting on the sliding drawer (2) and that supports said anti-wobbling pad member (71), said supporting seat (72) having a hollow plug head portion (723) that is adapted to be plugged fixedly in the sliding drawer (2), and a stem (724) that is disposed inside said plug head portion (723) and that is eccentric to a central axis of said plug head portion (723), said anti-wobbling pad member (71) being a ring that is sleeved around said stem (724) and that is adapted to abut against the synchronizing spindle (61).

12. An anti-wobbling unit (7) of a synchronizing device (9) that includes a synchronizing spindle extension connector (62) connected to at least one synchronizing spindle (61), the anti-wobbling unit (7) **characterized by** an anti-wobbling pad member (71) that is adapted to be mounted on the synchronizing spindle extension connector (62).
